# EUROPÄISCHE PATENTANMELDUNG

(11) **EP 4 253 492 A1**
(43) Veröffentlichungstag der Anmeldung: **04.10.2023**
(21) Anmeldenummer: 23165656.2
(22) Anmeldetag: 30.03.2023
(51) Int. Cl.: C09J 7/10, C09J 7/38, C09J 153/02

(54) **WIEDERABLÖSBARE SELBSTKLEBEPRODUKTE**

(30) Priorität: 31.03.2022 DE 102022107749
(71) Anmelder: tesa SE, 22848 Norderstedt (DE)
(72) Erfinder: DOLLASE, Thilo, 22848 Norderstedt (DE); TASCHE, Jos, 22848 Norderstedt (DE); SCHWARZ, Imke, 22848 Norderstedt (DE); GARBERS, Julia, 22848 Norderstedt (DE); PÖHLS, Jan Ole, 22848 Norderstedt (DE)
(74) Vertreter: tesa SE

(57) **Zusammenfassung**

Durch dehnendes Verstrecken wiederablösbares Selbstklebeprodukt, das zumindest eine Schicht einer Haftklebemasse enthält, enthaltend, a) mindestens 28 Gew.-% und höchstens 58 Gew.-% einer Elastomerkomponente, wobei i. die Elastomerkomponente zumindest 60 Gew.-% und bevorzugt höchstens 90 Gew.-%, jeweils bezogen auf die Elastomerkomponente, ein hydriertes Polyvinylaromat-Polydien-Blockcopolymer mit einem Polyvinylaromatenanteil von mindestens 18 Gew.-% und einem Peak-Molekulargewicht von 100.000 bis 500.000 g/mol, bestimmt gemäß GPC (Test I), enthält, ii. die Polydien-Blöcke im Wesentlichen voll hydriert sind, iii. das hydrierte Polyvinylaromat-Polydien-Blockcopolymer einen ABA-Aufbau, (AB)ₙZ-Aufbau mit n = 2 oder radialen (AB)ₙ-Aufbau oder radialen (AB)ₙ-Z-Aufbau mit n ≥ 3 aufweist, wobei A = Polyvinylaromat, B = Ethylen und Butylen oder Ethylen und Propylen und Z = Derivat einer Kopplungssubstanz sind und wobei der Ethylen-Anteil in den B-Blöcken bevorzugt mindestens 50 Gew.-% beträgt, und iv. die Elastomerkomponente bis zu 35 Gew.-% bezogen auf die Elastomerkomponente zumindest eine Sorte eines hydrierten Diblockcopolymers mit einem A'B`-Aufbau oder (A'B')ₙZ-Aufbau mit n = 1 enthält, wobei A' = Polyvinylaromat, B' = Ethylen und Butylen oder Ethylen und Propylen, Z = Derivat einer Kopplungssubstanz ist und A' = A bzw. B' = B sein kann, b) eine Klebharzkomponente, c) optional eine Weichmacherkomponente, d) optional weitere Zuschlagsstoffe, wobei sich der Anteil der Elastomerkomponente auf das Gesamtgewicht der Haftklebemasse bezieht sowie zumindest eine Lage eines temporären Trägermaterials ("Trennliner").

## Beschreibung

Die vorliegende Erfindung betrifft insbesondere doppelseitig klebende Selbstklebeprodukte, die durch dehnendes Verstrecken aus einer Verklebung wieder ablösbar sind. Sie enthalten zumindest eine Schicht einer Haftklebemasse basierend auf hydrierten Polyvinylaromat-Polydien-Blockcopolymeren und zeichnen sich durch sehr gute Wärmescherfestigkeit und Langlebigkeit aus.

Klebstoffe und Klebebänder werden im Allgemeinen verwendet, um zwei Substrate zusammenzufügen, so dass eine dauerhafte oder permanente Verbindung entsteht. Nicht nur zuletzt sind Trends erkennbar, dass solche permanenten Verbindungen zum Zwecke des Recyclings wieder aufgetrennt werden sollen. Entsprechend werden Klebelösungen gesucht, die zunächst anwendungsgerechte Verklebungseigenschaften bieten, zum anderen aber auch wiederablösbar sind. Eine Herausforderung dabei besteht allein darin, Verklebungsleistungen entsprechend immer anspruchsvolleren Anwendungen zum Beispiel im Hinblick auf die zu verklebenden Materialien, aber auch an die Beständigkeit der Klebung zu realisieren. So werden beispielsweise für Verklebungen im Automobilbereich hohe Wärmescherfestigkeiten gefordert und dies auch auf Kunststoffanbauteilen. Ein gängiges Material für solche Anbauteile ist PP/EPDM, PP/EPM oder PP/EPR. Die Verklebung solcher Materialien stellt eine besondere Herausforderung dar.

Durch dehnendes Verstrecken wiederablösebare Selbstklebeprodukte, die eine oder mehrere Schichten auf Basis von Styrol-Blockcopolymeren enthalten, sind bekannt. US 4,024,312 A schlägt mehrschichtige Klebestreifen für medizinische Anwendungen vor, bei denen eine dehnbare Trägerschicht und eine Haftklebeschicht auf Basis von ABA-Blockcopolymeren basieren. Die Dehnbarkeit des Trägers soll mindestens 200 % betragen und der 50 % Modul weniger als etwa 14 MPa. Als ABA-Blockcopolymere können solche mit B-Blöcken aus Butadien, Isopren, Ethylen oder Butylen genutzt werden. Für Trägerschichten explizit genannt sind SBS und SIS, für Haftklebeschichten lediglich SIS.

US 6,372,341 B1 nennt eine Reihe möglicher Elastomere für dehnbare Trägerschichten und erwähnt insbesondere LLDPE, LDPE, SIS und SEBS. Explizit genannte Klebemassen basieren in vielen Beispielen auf Polyacrylaten und Trägerschichten auf LLDPE oder LDPE. Es wird auch ein dehnbarer Klebstrip genannt, der einen Träger aus SEBS enthält und eine Klebemasse aus harzmodifiziertem SIS.

DE 10 2012 223 670 A1 beansprucht durch dehnendes Verstrecken wiederablösbare Klebestreifen in mehrschichtigem Design mit einer Polyurethan-basierenden Trägerschicht und zumindest einer Haftklebeschicht aus einer Formulierung basierend auf einem Vinylaromaten-Blockcopolymer. Bevorzugt und explizit genannt werden Vinylaromaten-Blockcopolymere mit ungesättigten Polydien-Elastomerblöcken.

Auch wenn die vorgeschlagenen Systeme für viele Anwendungen sehr gut geeignet sind, besteht darüber hinaus der Wunsch, durch dehnendes Verstrecken wiederablösebare Selbstklebeprodukte anzubieten, die auch aus sehr langlebigen Klebeverbindungen wieder herausgelöst werden können. Grundsätzlich werden unter den Styrol-Blockcopolymeren für sehr langzeitstabile Formulierungen solche Typen angeboten, die im Polydien-Block hydriert sind, sogenannte hydrierte Polystyrol-Polydien Blockcopolymere. Es handelt sich dabei insbesondere um Polystyrol-Poly(ethylen/butylen), SEBS, und Polystyrol-Poly(ethylen/propylen), SEPS, Blockcopolymere.

Bei der Konzeption durch dehnendes Verstrecken wiederablösbarer Selbstklebeprodukte ist zu berücksichtigen, dass die Kraft, die für das Verstrecken erforderlich ist, nicht zu hoch ist, da es sonst zu unerwünschtem Reißen des Selbstklebeprodukts kommen kann, bevor der Ablösevorgang vollständig abgeschlossen ist. Zudem finden hohe Kräfte, die für das Verstrecken erforderlich sind, typischerweise bei Anwendern keine Akzeptanz. Eine erste grobe Vorauswahl potenziell geeigneter Basiselastomere für Formulierungen für durch dehnendes Verstrecken wiederablösbare Selbstklebebänder kann der Fachmann über den 300 % Modul treffen. Diese mechanische Eigenschaft ist für thermoplastische Elastomere eine gängige Herstellerangabe. Hier erkennt man jedoch, dass Polystyrol-Polydien Blockcopolymere typischerweise einen signifikant geringeren 300 % Modul aufweisen (für SIS und SBS typischerweise kleiner als 3,5 MPa; cf. "Innovation powered by Kraton Polymers Product Guide", Kraton Performance Polymers, Inc., 2016) als hydrierte Elastomere (für SEBS mit etwa 30 Gew.-% Polystyrolanteil typischerweise höher als 4 MPa; cf. "Innovation powered by Kraton Polymers Product Guide", Kraton Performance Polymers, Inc., 2016), so dass es nicht auf der Hand liegt, dass mit hydrierten Polystyrol-Polydien Blockcopolymeren Formulierungen zugänglich sind, die für durch dehnendes Verstrecken wiederablösbare Selbstklebeprodukte geeignet sind.

Trotzdem hat es Ansätze gegeben, um auf Basis hydrierter Polystyrol-Polydien Blockcopolymeren Formulierungen vorzuschlagen, die für durch dehnendes Verstrecken wiederablösbare Selbstklebeprodukte geeignet sind (DE 100 03 318 A1, DE 102 52 088 A1, DE 102 52 089 A1, DE 10 2007 021 504 A1).

DE 100 03 318 A1 nennt 700 µm dicke Selbstklebestreifen, die durch dehnendes Verstrecken wiederablösbar und insbesondere für die Fixierung von Wandhaken gedacht sind. Beispielhaft sind auch Formulierungen auf Basis von hydrierten Polystyrol-Polydien-Blockcopolymeren genannt. Die Leistungsfähigkeit von Formulierungen mit einem Triblockcopolymer und einem oder zwei Klebharzen wird jedoch als nicht anforderungsgerecht beschrieben. Lediglich Formulierungen, die zwei Sorten hydrierter Polystyrol-Polydien-Blockcopolymere enthalten, nämlich eines mit einem Polystyrol-Anteil von mindestens 25 Gew.-% und eines mit einem Polystyrol-Anteil von höchstens 20 Gew.- %, ergeben anforderungsgerechte Formulierungen. Dies zeigt auf, dass es eine anspruchsvolle Aufgabe ist, eine Rezeptur basierend auf hydrierten Polystyrol-Polydien Blockcopolymeren, die an sich durch dehnendes Verstrecken wiederablösbar sein mag, zu konzipieren, um jeweils auf eine gegebene Anwendung hin vollständig auch im Sinne der Verklebungsanforderungen leistungsgerecht zu funktionieren.

DE 102 52 088 A1 offenbart durch dehnendes Verstrecken wiederablösbare Klebestreifen in einschichtigem und mehrschichtigem Design. Hier genannte einschichtige Klebestreifen auf Basis von SEBS zeigen eine unzureichende Reißerbeständigkeit trotz einer Produktdicke von 700 µm. Für mehrschichtige Produktdesigns werden in den Beispielen SIS-basierende Formulierungen genutzt, die eine maximale Dehnbarkeit von typischerweise mehr als 1000 % aufweisen. Die Schrift offenbart Formulierungen mit sehr geringem (Kraton G1657: 13 Gew.-%; Septon 2063: 13 Gew.-%) und sehr hohem Polystyrol-Gehalt (Kraton GRP 6919: 40 Gew.-%). Mit den angegebenen Formulierungen sind keine reißerstabilen, einschichtigen, durch dehnendes Verstrecken wiederablösbare Selbstklebeprodukte erhältlich. Um zu reißerstabilen, durch dehnendes Verstrecken wiederablösbaren Selbstklebeprodukten zu gelangen, wird die Einführung einer Polystyrol-Polydien-basierten Mittelschicht vorgeschlagen. Von den Formulierungen mit den dort vorgeschlagenen hydrierten Polystyrol-Polydien-Blockcopolymeren kann eine eingeschränkte Wärmescherfestigkeit erwartet werden.

DE 102 52 089 A1 führt wie auch DE 100 03 318 A1 aus, dass 700 µm dicke Selbstklebestreifen nicht anforderungsgerecht (auch hier im Hinblick auf Wandhakenfixierung) funktionieren, wenn hydrierte Polystyrol-Polydien-Blockcopolymere nicht auf spezielle Weise mit anderen Elastomeren kombiniert werden. Dies untermauert erneut die besondere Herausforderung, wenn durch dehnendes Verstrecken wiederablösbare Selbstklebestreifen mit Haftklebeformulierungen basierend auf hydrierten Polystyrol-Polydien Blockcopolymeren konzipiert und eine spezielle Verklebungsleistung erreicht werden sollen.

Die DE 10 2007 021 504 A1 lehrt einschichtige durch dehnendes Verstrecken wiederablösbare Klebestreifen basierend auf SEBS oder SEPS mit einem hohen Anteil an Weichharz in einer Produktdicke von 700 µm. Hier werden Kombinationen aus verschiedenen hydrierten Polystyrol-Polydien-Blockcopolymeren vorgeschlagen. Es wurde aber offenbar erkannt, dass hydrierte Polystyrol-Polydien-Blockcopolymere mit einem 300 % Modul > 3 MPa nicht als Majoritätsteil innerhalb der Elastomerkomponente eingesetzt werden können. Daher wird in den explizit ausgeführten Beispielformulierungen in der Elastomerkomponente mit einem hohen Anteil an einem Elastomer mit geringem Polystyrol-Gehalt (< 15 Gew.-%) formuliert, was zwar zu guter Wiederablösbarkeit auch auf sensiblen Untergründen führen kann, jedoch eine für viele industrielle Anwendungen unzureichende Wärmescherfestigkeit mit sich bringt.

Aufgabe der Erfindung ist es daher, durch dehnendes Verstrecken wiederablösbare Selbstklebeprodukte mit hoher Langzeitstabilität zur Verfügung zu stellen, die trotz der Ablösbarkeit eine gute Verklebungsleistung auch auf unpolaren Untergründen wie PP/EPDM, PP/EPM oder PP/EPR bieten und gleichzeitig auch eine gesteigerte Wärmescherfestigkeit.

Gelöst wird diese Aufgabe in unerwarteter Weise durch Selbstklebeprodukte, die zumindest eine Schicht einer Haftklebemasse enthalten, wie sie in den Ansprüchen 1 und 2 beschrieben ist. Gegenstand der Unteransprüche sind vorteilhafte Fortbildungen des Erfindungsgegenstandes. Des Weiteren ist Teil der Erfindung ein Substrat, insbesondere ein Bauteil, auf das ein erfindungsgemäßes Selbstklebeprodukt verklebt ist.

Daher ist ein erster Gegenstand der vorliegenden Erfindung ein durch dehnendes Verstrecken wiederablösbares Selbstklebeprodukt, das zumindest eine Schicht einer Haftklebemasse enthält, enthaltend:
a) mindestens 28 Gew.-% und höchstens 58 Gew.-% einer Elastomerkomponente, wobei
   i. die Elastomerkomponente zumindest etwa 60 Gew.-% und bevorzugt höchstens etwa 90 Gew.-%, jeweils bezogen auf die Elastomerkomponente, ein hydriertes Polyvinylaromat-Polydien-Blockcopolymer mit einem Polyvinylaromatenanteil von mindestens 18 Gew.-% und einem Peak-Molekulargewicht von 100.000 bis 500.000 g/mol, bestimmt gemäß GPC (Test I), enthält,
   ii. die Polydien-Blöcke im Wesentlichen voll hydriert sind,
   iii. das hydrierte Polyvinylaromat-Polydien-Blockcopolymer einen ABA-Aufbau, (AB)ₙZ-Aufbau mit n = 2 oder radialen (AB)ₙ-Aufbau oder radialen (AB)ₙ-Z-Aufbau mit n ≥ 3 aufweist, wobei A = Polyvinylaromat, B = Ethylen und Butylen oder Ethylen und Propylen und Z = Derivat einer Kopplungssubstanz sind und wobei der Ethylen-Anteil in den B-Blöcken bevorzugt mindestens 50 Gew.-% beträgt, und
   iv. die Elastomerkomponente bis zu 35 Gew.-% bezogen auf die Elastomerkomponente zumindest eine Sorte eines hydrierten Diblockcopolymers mit einem A'B`-Aufbau oder (A'B')ₙZ-Aufbau mit n = 1 enthält, wobei A' = Polyvinylaromat, B' = Ethylen und Butylen oder Ethylen und Propylen, Z = Derivat einer Kopplungssubstanz ist und A' = A bzw. B' = B sein kann,
b) eine Klebharzkomponente,
c) optional eine Weichmacherkomponente,
d) optional weitere Zuschlagsstoffe,
wobei sich der Anteil der Elastomerkomponente auf das Gesamtgewicht der Haftklebemasse bezieht
sowie zumindest eine Lage eines temporären Trägermaterials ("Trennliner").

Gemäß einer ersten bevorzugten Ausführungsform der Erfindung weist das obige durch dehnendes Verstrecken wiederablösbare Selbstklebeprodukt, das zumindest eine Schicht einer Haftklebemasse enthält, neben der zumindest einen Lage eines temporären Trägermaterials ("Trennliner") zumindest eine Lage eines dehnbaren Permanentträgermaterials auf.

Des Weiteren ist ein zweiter Gegenstand der vorliegenden Erfindung ein durch dehnendes Verstrecken wiederablösbares Selbstklebeprodukt, das zumindest eine Schicht einer Haftklebemasse enthält, enthaltend:
a) mindestens 28 Gew.-% und höchstens 58 Gew.-% einer Elastomerkomponente, wobei
   i. die Elastomerkomponente zumindest etwa 60 Gew.-% und bevorzugt höchstens etwa 90 Gew.-%, jeweils bezogen auf die Elastomerkomponente, ein hydriertes Polyvinylaromat-Polydien-Blockcopolymer mit einem Polyvinylaromatenanteil von mindestens 18 Gew.-% und einem Peak-Molekulargewicht von 100.000 bis 500.000 g/mol, bestimmt gemäß GPC (Test I), enthält,
   ii. die Polydien-Blöcke im Wesentlichen voll hydriert sind,
   iii. das hydrierte Polyvinylaromat-Polydien-Blockcopolymer einen ABA-Aufbau, (AB)ₙZ-Aufbau mit n = 2 oder radialen (AB)ₙ-Aufbau oder radialen (AB)ₙ-Z-Aufbau mit n ≥ 3 aufweist, wobei A = Polyvinylaromat, B = Ethylen und Butylen oder Ethylen und Propylen und Z = Derivat einer Kopplungssubstanz sind und wobei der Ethylen-Anteil in den B-Blöcken bevorzugt mindestens 50 Gew.-% beträgt, und
   iv. optional die Elastomerkomponente bis zu 35 Gew.-% bezogen auf die Elastomerkomponente zumindest eine Sorte eines hydrierten Diblockcopolymers mit einem A'B`-Aufbau oder (A'B')ₙZ-Aufbau mit n = 1 enthält, wobei A' = Polyvinylaromat, B' = Ethylen und Butylen oder Ethylen und Propylen, Z = Derivat einer Kopplungssubstanz ist und A' = A bzw. B' = B sein kann,
b) eine Klebharzkomponente,
c) eine Weichmacherkomponente zu mindestens 2 Gew.-% und maximal 30 Gew.-% und
d) optional weitere Zuschlagsstoffe,
wobei sich der Anteil der Elastomerkomponente auf das Gesamtgewicht der Haftklebemasse bezieht,
sowie zumindest eine Lage eines temporären Trägermaterials ("Trennliner").

Gemäß einer weiteren bevorzugten Ausführungsform der Erfindung weist das obige durch dehnendes Verstrecken wiederablösbare Selbstklebeprodukt, das zumindest eine Schicht einer Haftklebemasse enthält, neben der zumindest einen Lage eines temporären Trägermaterials ("Trennliner") zumindest eine Lage eines dehnbaren Permanentträgermaterials auf.

Unter im Wesentlichen voll hydriert im Rahmen der vorliegenden Erfindung ist ein Hydrierungsgrad von wenigstens 90 %, vorzugsweise von wenigstens 95 % und besonders bevorzugt von wenigstens 99 % zu verstehen. Unter hydrierten Blockcopolymeren werden im Rahmen der vorliegenden Erfindung solche verstanden, bei denen die Polydien-Blöcke im Wesentlich voll hydriert vorliegen.

Beispiele für erfindungsgemäß einsetzbare Kopplungssubstanzen sind unter anderem bei Holden zu finden (G. Holden, D. R. Hansen in "Thermoplastic Elastomers", G. Holden, H. R. Kricheldorf, R. P. Quirk (Hrsg.), 3. Aufl. 2004, C. Hanser, München, S. 49f), ohne sich hierdurch einschränken zu wollen.

Unter einer Haftklebmasse wird im Einklang mit dem allgemeinen Verständnis eine Klebmasse verstanden, die bereits unter relativ schwachem Andruck eine dauerhafte Verbindung mit fast allen Haftgründen erlaubt und ggf. nach Gebrauch im Wesentlichen rückstandsfrei vom Haftgrund wieder abgelöst werden kann. Eine Haftklebmasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebmasse beruht auf ihren adhäsiven Eigenschaften und die Wiederablösbarkeit auf ihren kohäsiven Eigenschaften.

### Haftklebemasse

Erfindungsgemäße durch dehnendes Verstrecken wiederablösbares Selbstklebeprodukte enthalten zumindest eine Schicht einer Haftklebemasseformulierung, die bevorzugt die in der folgenden Tabelle angegebene Leistungsanforderung erfüllt.

**Tabelle 1 - Bevorzugtes Leistungsprofil**

| Anforderung | Messmethode | typisch | bevorzugt | Sehr bevorzugt |
|---|---|---|---|---|
| Klebkraft Stahl, | Test II | ≥ 3,0 N/cm | ≥ 5,0 N/cm | ≥ 6,0 N/cm |
| Klebkraft PP/EPR | Test III | ≥ 2,0 N/cm | ≥ 4,0 N/cm | ≥ 5,0 N/cm |
| SAFT 200 g | Test IV | ≥ 115°C | ≥ 130 °C | ≥ 160 °C |
| Ablösetest (Reißerrate) | Test V | ≤ 25 % | ≤ 15 % | ≤ 10 % |

### a) Elastomerkomponente

Im Rahmen der vorliegenden Erfindung hat sich vor allem gezeigt, dass sich die vorteilhafte Kombination an Eigenschaften, insbesondere die hohe Scherfestigkeit bei hohen Temperaturen, durch eine ausgewogene Abstimmung der einzelnen Komponenten der Haftklebemasse erreichen lässt, jedoch nicht durch solche, die vielfach im Stand der Technik offenbart wurden.

So eignen sich erfindungsgemäß Formulierungen, die zu mindestens 28 Gew.-% und höchstens 58 Gew.-%, bevorzugt zwischen 35 Gew.-% und 55 Gew.-%, sehr bevorzugt zwischen 40 Gew.-% und 52 Gew.-% eine Elastomerkomponente enthalten, wobei die Elastomerkomponente zu mindestens 60 Gew.-%, bevorzugt zu mindestens 70 Gew.-% und sehr bevorzugt zu zumindest 80 Gew.-% und höchstens 90 Gew.-% bezogen auf die Elastomerkomponente zumindest eine erste Sorte eines hydrierten Polyvinylaromat-Polydien-Blockcopolymers enthält.

Das zumindest eine erste hydrierte Polyvinylaromat-Polydien-Blockcopolymer, das erfindungsgemäß eingesetzt wird, zeichnet sich durch einen linearen ABA-Aufbau oder linearen (AB)ₙZ-Aufbau mit n = 2 oder radialen (AB)ₙ-Aufbau oder radialen (AB)ₙZ-Aufbau mit n ≥ 3 aus. Vinylaromaten zum Aufbau des Blocks A umfassen bevorzugt Styrol, α-Methylstyrol und/oder andere Styrol-Derivate. Der Block A kann somit als Homo- oder Copolymer vorliegen. Besonders bevorzugt ist der Block A ein Polystyrol. Blockcopolymere dieser Art bilden das Rückgrat der Formulierung. Sie bilden einen wesentlichen Teil, über den Einfluss auf die Wärmescherfestigkeit und auch die Reißerbeständigkeit genommen wird. Jedoch kann ein zu hoher Anteil oder eine ungünstige Wahl der Molmasse an Blockcopolymeren dieser Art die Klebkraft reduzieren. Um diese Eigenschaften optimal auszubalancieren, hat es sich gezeigt, dass Blockcopolymere dieser Art ein Peak-Molekulargewicht von mindestens etwa 100.000 g/mol und höchstens etwa 500.000 g/mol haben sollten. Je höher das Molekulargewicht, desto herausfordernder zeigt sich die Verarbeitbarkeit des Materials. Daher wird ein Peak-Molekulargewicht von höchstens 250.000 g/mol bevorzugt. Sehr vorteilhaft sind lineare Triblockcopolymere mit einem Peak-Molekulargewicht zwischen 100.000 g/mol und 200.000 g/mol.

Um eine anforderungsgerechte Wärmescherfestigkeit zu erreichen, wird ein Minimum von 18 Gew.-% an Polyvinylaromaten-Anteil in dem zumindest einen Blockcopolymer dieser Art ausgewählt. Dieser sollte allerdings wiederum auch nicht zu hoch sein, da bei einem zu hohen Anteil die Klebkraft reduziert wird. Vorteilhaft ist es, wenn der Polyvinylaromaten-Anteil nicht höher als 35 Gew.-% liegt. Günstig ist ein Polyvinylaromaten-Anteil in einem Bereich zwischen 20 Gew.-% und 33 Gew.-%. Der Anteil an Polyvinylaromaten in den hydrierten Polyvinylaromaten-Polydien-Blockcopolymeren kann beispielsweise mittels ¹H- oder ¹³C-NMR (Kernspinresonanzspektroskopie, Test XI) bestimmt werden. Der Anteil an Polyvinylaromaten kann für kommerziell erhältliche hydrierte Polyvinylaromat-Polydien-Blockcopolymeren auch den Herstellerangaben entnommen werden.

Die in der erfindungsgemäßen Haftklebemasse eingesetzten hydrierten Polyvinylaromat-Polydien-Blockcopolymere sind bevorzugt solche, deren Vinylaromaten-Blöcke (A-Blöcke) Styrol enthalten und die gebildet werden durch Polymerisation von Dienen (B-Blöcke) und anschließende Hydrierung, so dass vorzugsweise Ethylen und Butylen oder Ethylen und Propylen die B-Blöcke aufbauen. Bevorzugt werden Blockcopolymere, die in Bezug auf die Polydien-Blöcke (B-Blöcke) im Wesentlichen vollständig hydriert sind, eingesetzt. Der Ethylen-Anteil in den B-Blöcken liegt bevorzugt bei mindestens 50 Gew.-%.

Um das Eigenschaftsprofil der erfindungsgemäßen Haftklebemasse weiter zu verbessern, hat es sich als vorteilhaft erwiesen, wenn die Elastomerkomponente zusätzlich zu einem hydrierten Polyvinylaromat-Polydien-Blockcopolymer mit einem linearen oder radialen Aufbau ein hydriertes Polyvinylaromat-Polydien-Diblockcopolymer A'B' enthält, wobei A' und B' vorzugsweise A und B wie oben definiert entsprechen und die Polydienblöcke im Wesentlichen voll hydriert sind, sie können sich aber auch beispielsweise hinsichtlich der Molmasse und/oder der Zusammensetzung unterscheiden.

In einer bevorzugten Ausführungsform handelt es sich bei dem hydrierten Diblockcopolymer um eines mit einem Peak-Molekulargewicht, bestimmt mittels GPC (Test I), von weniger 100.000 g/mol. Bevorzugt beträgt der Anteil des hydrierten Diblockcopolymers in der Elastomerkomponente nicht mehr als 35 Gew.-%, vorzugsweise 10 bis 25 Gew.-%, jeweils bezogen auf das Gesamtgewicht der Elastomerkomponente.

In einer weiterhin bevorzugten Ausführungsform weist die Elastomerkomponente weiterhin zumindest ein hydriertes Diblockcopolymer mit einem Peak-Molekulargewicht, bestimmt mittels GPC (Test I), von größer 100.000 g/mol auf.

Zumindest eine Sorte eines hydrierten Diblockcopolymers wird insbesondere dann eingesetzt, wenn in der Formulierung kein Weichmacher enthalten ist. Aber auch in Kombination mit Weichmachern ist der Einsatz von zumindest einer Sorte eines hydrierten Diblockcopolymers sinnvoll, da über hydrierte Diblockcopolymere vorteilhaft Einfluss auf die Klebkraft und das Auffließverhalten genommen werden kann.

Die Elastomerkomponente kann zudem ein weiteres hydriertes Polyvinylaromat-Polydien-Blockcopolymer enthalten, das sich durch einen linearen ABA-Aufbau sowie linearen (AB)ₙZ-Aufbau mit n = 2 oder radialen (AB)ₙ-Aufbau sowie radialen (AB)ₙZ-Aufbau mit n ≥ 3 auszeichnet. Dieses Blockcopolymer kann einen Polyvinylaromaten-Anteil von kleiner 18 Gew.-% oder mehr und unabhängig davon ein Peak-Molekulargewicht von mehr als 500.000 g/mol oder weniger als 100.000 g/mol oder dazwischen aufweisen. Sie kann auch mehrere dieser Art enthalten.

### b) Klebharzkomponente

Die erfindungsgemäße Haftklebemasse enthält weiterhin eine Klebharzkomponente. Der Anteil der Klebharzkomponente, bezogen auf das Gesamtgewicht der Haftklebemasse, beträgt typischerweise 28 Gew.-% bis 55 Gew.-%, vorzugsweise 35 Gew.- bis 50 Gew.-%. Die Klebharzkomponente enthält ein oder mehrere Klebharze. Die Klebharze sind so ausgewählt, dass sie hauptsächlich mit den durch die B-Blöcke dominierten Bereiche der Haftklebemasse mischbar (verträglich, kompatibel) sind. Zumindest ein Klebharz zeichnet sich weiterhin dadurch aus, dass es eine Erweichungstemperatur nach der Ring-und-Kugel-Methode von größer 95 °C, aber nicht mehr als 135 °C aufweist. Die Erweichungstemperatur kann dabei gemäß Test VI wie unten beschrieben bestimmt werden. Bevorzugt weisen alle Klebharze in der Klebharzkomponente eine Erweichungstemperatur in diesem Bereich auf.

Vorzugweise werden in der Klebharzkomponente solche Klebharze eingesetzt, die ausgewählt sind aus der Gruppe bestehend aus partiell oder vollständig hydriertem Harz auf Basis des Dicyclopentadiens, partiell oder vollständig hydrierte Kohlenwasserstoffharze auf Basis von C₅, C₅/C₉- oder C₉-Monomerströmen, Polyterpenharze auf Basis von α-Pinen und/oder β-Pinen und δ-Limonen und einem hydrierten Polymerisat reiner C₈- oder C₉-Aromaten, wobei das Harz partiell oder insbesondere vollständig hydriert ist.

Unter "partiell hydriert" ist im Rahmen der vorliegenden Erfindung ein Hydrierungsgrad von mindestens 80 %, vorzugsweise mindestens 85 % zu verstehen.

Die erfindungsgemäße Klebemasse weist vorzugsweise wenigstens ein Klebharz auf, das einen DACP (diacetone alcohol cloud point) von wenigstens 30 °C, vorzugsweise von wenigstens 40 °C aufweist. Der DACP kann dabei gemäß Test VII, wie unten beschrieben, bestimmt werden.

In einer weiterhin bevorzugten Ausführungsform umfasst die erfindungsgemäße Haftklebemasse wenigstens ein Klebharz, das einen MMAP (mixed methylcyclohexane aniline point) von größer 60 °C, vorzugsweise größer 70 °C aufweist. Der MMAP kann gemäß Test VIII wie unten beschrieben bestimmt werden.

Die Klebharzkomponente kann neben dem zumindest einen zuvor beschriebenen Klebharz auch ein weiteres oder mehrere weitere Klebharze enthalten, die nicht den angegebenen Definitionen hinsichtlich Erweichungstemperatur und/oder DACP- und/oder MMAP-Trübungspunkt entsprechen. So sind auch Klebharze mit einer Erweichungstemperatur unterhalb 95 °C wie etwa 90 °C oder etwa 85 °C zu einem Anteil in Bezug auf die Zusammensetzung der Klebharzkomponente von bis zu 10 Gew.-% oder sogar bis zu 20 Gew.-% einsetzbar. So sind auch Klebharze mit einer Erweichungstemperatur oberhalb 135 °C wie etwa 140 °C zu einem Anteil in Bezug auf die Zusammensetzung der Klebharzkomponente von bis zu 10 Gew.-% oder sogar bis zu 20 Gew.-% einsetzbar.

Es sind auch Klebharze mit einem MMAP-Trübungspunkt unterhalb 60 °C oder sogar unterhalb 45 °C und/oder einem DACP-Trübungspunkt unterhalb 30 °C oder sogar unterhalb 15 °C mit einem Anteil in Bezug auf die Zusammensetzung der Klebharzkomponente von bis zu 20 Gew.-% oder sogar bis zu 40 Gew.-% einsetzbar. Beispiele für solche Klebharze sind Terpenphenolharze insbesondere mit einer OH-Zahl von höchstens 100 mg KOH / g und Kolophoniumester, die teilweise hydriert, vollhydriert oder disproportioniert sein können.

### c) Weichmacherkomponente

Neben der Elastomerkomponente und der Klebharzkomponente kann die erfindungsgemäße Haftklebemasse weiterhin eine Weichmacherkomponente enthalten. Eine Weichmacherkomponente ist jedenfalls vorhanden, sofern kein Diblockcopolymer in der Haftklebemasse vorgesehen ist. Es kann jedoch auch eine Weichmacherkomponente in Kombination mit einem Diblockcopolymer genutzt werden.

Der Anteil an Weichmacherkomponente, bezogen auf das Gesamtgewicht der Haftklebemasse, beträgt dabei vorzugsweise nicht mehr als 30 Gew.-%, vorzugsweise 2 bis 20 Gew.-%, besonders bevorzugt 4 bis 15 Gew.-%. Es hat sich überraschend gezeigt, dass ein bereits geringer Weichmacherkomponentenanteil in den genannten Mengen ausreichend ist, um eine Haftklebemasse mit einer ausreichend hohen Verklebungsfestigkeit zu erhalten, was im Gegensatz zu dem steht, was der Stand der Technik lehrt, wo zum Teil von einem Gehalt an Weichmachern von 60 bis 95 Gew.-% ausgegangen wird. Es hat sich zudem ebenfalls überraschend gezeigt, dass ein relativ hoher Weichmacherkomponentenanteil in den genannten Mengen immer noch zu sehr guter Wärmescherfestigkeit führt, sofern nach erfindungsgemäßem Formulierungskonzept und erfindungsgemäßer Rohstoffauswahl vorgegangen wird. Die Weichmacherkomponente kann einen oder mehrere Weichmacher enthalten.

Der Weichmacher ist vorzugsweise ausgewählt aus der Gruppe bestehend aus Ethylen/Propylen-Copolymer, Ethylen/Butylen-Copolymer, Butylen/iso-Butylen-(Co)-Polymer, Butylenhomopolymer und iso-Butylenhomopolymer.

In einer weiterhin bevorzugten Ausführungsform weist der Weichmacher eine gewichtsmittlere Molekularmasse, bestimmt mittels GPC (Test I), von mindestens 100.000 g/mol und höchstens 1.000.000 g/mol auf. In diesen Fällen ist der Weichmacher vorzugweise ein Ethylen/Propylen-Copolymer oder Ethylen/Butylen-Copolymer mit linearer oder radialer Struktur.

In einer alternativ bevorzugten Ausführungsform weist der Weichmacher eine gewichtsmittlere Molmasse, bestimmt mittels GPC (Test I), von mindestens 3.000 g/mol und höchstens 20.000 g/mol auf. In diesem Fall handelt es sich bei dem Weichmacher vorzugsweise um ein Butylen/iso-Butylen-(Co)-Polymer.

Geeignet sind überraschenderweise auch Weichharze auf Basis von Kolophonium, insbesondere Methylestern des Kolophoniums oder des teil- oder vollhydrierten Kolophoniums.

### d) weitere Zuschlagstoffe

Um das Eigenschaftsprofil der erfindungsgemäßen Haftklebemasse weiter anzupassen, können der Haftklebemasse weitere Zuschlagstoffe beigefügt werden. Dabei handelt es sich vorzugsweise um solche, die ausgewählt sind aus der Gruppe bestehend aus primären Antioxidantien wie sterisch gehinderten Phenolen, sekundären Antioxidantien wie Phosphite oder Thioether, Prozessstabilisatoren wie C-Radikalfänger, Lichtschutzmitteln wie UV-Absorber oder sterisch gehinderten Aminen, Verarbeitungshilfsmitteln und weiteren Elastomeren wie solche auf Basis reiner Kohlenwasserstoffe wie ungesättigte Polydiene, natürlich oder synthetisch erzeugtes Polyisopren oder Polybutadien, chemisch im wesentlich gesättigte Elastomere wie gesättigte Ethylen-Propylen-Copolymere, α-Olefincopolymere, Polyisobutylen, Butylkautschuk, Ethylen-Propylenkautschuk und funktionalisierte Kohlenwasserstoffe wie halogenhaltige, acrylathaltige oder vinyletherhaltige Polyolefine. Des Weiteren können organische oder anorganische Füllstoffe eingesetzt werden sowie Farbstoffe und Farbpigmente.

### Selbstklebeprodukte

Das erfindungsgemäße Selbstklebeband enthält neben der zumindest einen Haftklebemasseschicht zumindest eine Lage eines temporären Trägermaterials. Bei diesem temporären Trägermaterial handelt es sich um ein filmförmiges Material, von dem eine Haftklebemasseschicht abgelöst werden kann, so dass der übrige Teil des Selbstklebebands anschließend mit einem zu verklebenden Substrat oder einem anderen Material, das mit dem übrigen Teil des Selbstklebebands einen Verbund bilden soll, in Kontakt gebracht werden kann.

Bei dem temporären Trägermaterial handelt es sich um ein Trennpapier oder eine Trennfolie auch Trenn- oder Releaseliner genannt, jedenfalls um ein nicht fest mit der Haftklebemasseschicht verbundenes Material, das insbesondere abhäsiv ausgerüstet ist, so dass ein Ablösen einer Haftklebemasseschicht von ihm ermöglicht wird. Es stellt daher ein Hilfsmittel zu dessen Herstellung, Lagerung oder für die Weiterverarbeitung beispielsweise durch Stanzen dar. Schließlich kann der Haftklebestreifen ein- oder beidseitig mit einem Liner eingedeckt sein. Insbesondere wenn der Haftklebestreifen nur einseitig mit einem Liner versehen ist, ist dieser ein temporärer Träger, der beidseitig antiadhäsiv beschichtetet ist..

Unter Verwendung der zumindest einen vorgenannten Haftklebemasse können erfindungsgemäße Selbstklebeprodukte gestaltet sein als
- einschichtige, beidseitig selbstklebende Klebebänder, sogenannte "Transfertapes", aus einer einzigen Schicht einer erfindungsgemäßen Haftklebemasse in Kombination mit einem temporären Trägermaterial;
- mehrschichtige beidseitig selbstklebende Klebebänder, bei denen die Schichten jeweils aus den erfindungsgemäßen Haftklebemassen bestehen, in Kombination mit einem temporären Trägermaterial;
- beidseitig selbstklebend ausgerüstete Klebebänder mit einem Zwischenträger ("permanentes Trägermaterial" oder "Permanentträger"), der entweder in einer Klebemassenschicht oder zwischen zwei Klebemassenschichten angeordnet ist, in Kombination mit einem temporären Trägermaterial.

Ein Gegenstand der vorliegenden Erfindung ist daher auch ein Selbstklebeprodukt mit einem temporären Trägermaterial und einem Permanentträger, auf den mindestens eine Schicht der erfindungsgemäßen Haftklebemasse aufgebracht ist. Ebenfalls Gegenstand der Erfindung ist ein Selbstklebeprodukt mit einem temporären Trägermaterial und einem Permanentträger, auf den auf beiden Seiten eine Schicht erfindungsgemäßer Haftklebemasse aufgebracht ist, wobei die beiden Schichten aus gleicher oder verschiedenen Haftklebemassen bestehen können. Darüber hinaus ist Gegenstand der Erfindung ein Selbstklebeband mit einem temporären Trägermaterial und einem Permanentträger, auf den auf einer Seite eine Schicht einer erfindungsgemäßen Haftklebemasse aufgebracht ist und auf der anderen Seite eine weitere, nicht erfindungsgemäße Klebemasse aufgebracht ist. Letztere kann haftklebrig oder nicht haftklebrig beziehungsweise heißsiegelfähig sein.

Dabei können die doppelseitigen Produkte also einen symmetrischen oder einen asymmetrischen Produktaufbau aufweisen.

Bevorzugt sind einschichtige, beidseitig selbstklebende Klebebänder aus einer einzigen Schicht einer erfindungsgemäßen Haftklebemasse in Kombination mit einem temporären Trägermaterial.

Bevorzugt ist zudem eine Ausführungsform des Selbstklebeprodukts, bei dem der Permanentträger nur aus einer einzigen Schicht aus einer Polymerfolie besteht.

Bei dem Permanentträger handelt es sich vorzugweise um eine Folie. Insbesondere vom erfinderischen Gedanken umfasst sind Aufbauten mit einem dehnbaren Permanentträger in der Mitte des Haftklebstreifens, insbesondere in der Mitte der einzigen Haftklebemassenschicht, wobei die Dehnbarkeit des Zwischenträgers ausreichend sein muss, um ein Ablösen des Klebstreifens durch dehnendes Verstrecken zu gewährleisten. Als Permanentträger können zum Beispiel sehr dehnfähige Folien dienen. Beispiele für vorteilhaft einsetzbare dehnbare Permanentträger sind transparente Ausführungen aus WO 2011/124782 A1, DE 10 2012 223 670 A1, WO 2009/114683 A1, WO 2010/077541 A1, WO 2010/078396 A1. Der Permanentträger braucht aber nicht transparent zu sein. Er kann vor allem auch schwarz, grau, weiß oder farbig sein.

Zur Herstellung der Permanentträgerfolie werden filmbildende oder extrusionsfähige Polymere eingesetzt, die zusätzlich mono- oder biaxial orientiert sein können.

In einer bevorzugten Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern wie zum Beispiel die Erweichungstemperatur und/oder die Reißfestigkeit.

Vorzüglich lassen sich Polyurethane als Ausgangsmaterialien für dehnbare Permanentträgerschichten verwenden. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Rohstoffe, die dem Formulierer hierzu zur Verfügung stehen, sind zum Beispiel in EP 0 894 841 B1 und EP 1 308 492 B1 genannt. Dem Fachmann sind weitere Rohstoffe bekannt, aus denen erfindungsgemäße Permanentträgerschichten aufgebaut werden können. Polyesterpolyurethane, Polyetherpolyurethane und Polycaprolactonpolyurethane seien hier als Beispiele für Polyurethane genannt, die vorteilhaft im Sinne dieser Erfindung als Grundmaterial für Permanentträger genutzt werden können.

Weiterhin ist es vorteilhaft, auf Ethylenvinylacetat-Copolymere (EVA) basierende Materialien in Permanentträgerschichten einzusetzen, um Dehnbarkeit zu realisieren. Besonders vorteilhaft einsetzbar als Materialien für dehnbare Permanentträgerschichten sind Blockcopolymere. Dabei sind einzelne Polymerblöcke kovalent miteinander verknüpft. Die Blockverknüpfung kann in einer linearen Form vorliegen, aber auch in einer sternförmigen Form oder als Pfropfcopolymervariante. Ein Beispiel für ein vorteilhaft einsetzbares Blockcopolymer ist ein lineares Triblockcopolymer, dessen zwei endständige Blöcke eine Erweichungstemperatur von mindestens 40 °C, bevorzugt mindestens 70 °C aufweisen und dessen Mittelblock einer Erweichungstemperatur von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Erweichungstemperatur jeweils von mindestens 40 °C, bevorzugt mindestens 70 °C aufweisen und die über zumindest einen Polymerblock mit einer Erweichungstemperatur von höchstens 0 °C, bevorzugt höchstens -30 °C in der Polymerkette voneinander separiert sind. Beispiele für Polymerblöcke sind Polyether wie zum Beispiel Polyethylenglykol, Polypropylenglykol oder Polytetrahydrofuran, Polydiene, wie zum Beispiel Polybutadien oder Polyisopren, hydrierte Polydiene, wie zum Beispiel Polyethylenbutylen oder Polyethylenpropylen, Polyester, wie zum Beispiel Polyethylenterephthalat, Polybutandioladipat oder Polyhexandioladipat, Polycarbonat, Polycaprolacton, Polymerblöcke vinylaromatischer Monomere, wie zum Beispiel Polystyrol oder Poly-[α]-Methylstyrol, Polyalkylvinylether, Polyvinylacetat, Polymerblöcke [α],[β]-ungesättigter Ester wie insbesondere Acrylate oder Methacrylate. Dem Fachmann sind entsprechende Erweichungstemperaturen bekannt. Alternativ schlägt er sie beispielsweise im "Polymer Handbook" [J. Brandrup, E. H. Immergut, E. A. Grulke (Hrsg.), "Polymer Handbook", 4. Aufl. 1999, Wiley, New York] nach. Polymerblöcke können aus Copolymeren aufgebaut sein.

Weiterhin bevorzugt handelt es sich bei dem Träger um einen Schaumträger, besonders bevorzugt um einen Schaumträger aus einem PE- oder PU-Schaum. Dabei kann der Schaum jede bekannte Form von Schaumzellen aufweisen also offenzellig oder geschlossenzellig sein. Die Schäumung kann durch chemische oder physikalische Schäumungsmittel erzeugt worden sein, durch Einschlagen von Gas oder insbesondere Luft ("Frothing") oder durch Einbringen von Hohlkugeln, ohne dass diese Aufzählung abschließend ist, sondern lediglich als Beispiel zu verstehen ist. Spezifische Beispiele sind Glashohlkugeln, keramische Hohlkugeln, Metallhohlkugeln und expandierte, expandierbare und vorexpandierte Mikroballons. Kombinationen verschiedener genannter und weiterer Schäumungsmethoden sind ebenfalls möglich.

Zur Herstellung eines Permanentträgers kann es auch hier angebracht sein, Additive und weitere Komponenten hinzuzugeben, die die filmbildenden Eigenschaften verbessern, sofern vorhanden und gewünscht die Neigung zur Ausbildung von kristallinen Segmenten vermindern und/oder die mechanischen Eigenschaften gezielt verbessern oder auch gegebenenfalls verschlechtern.

Die Permanentträger können mehrlagig ausgestaltet sein.

Des Weiteren können die Permanentträger Deckschichten aufweisen, beispielsweise Sperrschichten, die ein Eindringen von Komponenten aus der Klebemasse in den Permanentträger oder umgekehrt unterbinden. Diese Deckschichten können auch Barriereeigenschaften haben, um so ein Durchdiffundieren von Wasserdampf und/oder Sauerstoff zu verhindern.

Zur besseren Verankerung der Haftklebemassen auf dem Permanentträger können die Permanentträger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Die Rückseite des Permanentträgers kann einer antiadhäsiven physikalischen Behandlung oder Beschichtung unterzogen sein.

Die Dicke der Permanentträgerschicht liegt typischerweise im Bereich von 10 bis 200 µm, bevorzugt zwischen 20 und 100 µm.

Die Spannung ("Stripkraft", Test IX) bei 50 % Dehnung sollte kleiner als 20 N/cm sein, bevorzugt kleiner als 10 N/cm, um ein einfaches Ablösen ohne allzu großen Kraftaufwand zu ermöglichen.

Besonders vorteilhaft ist ein Selbstklebeprodukt bestehend aus
- einem einschichtigen Permanentträger (Zwischenträger), vorzugsweise aus Polyurethan, wobei der Träger eine Reißdehnung von mindestens 100 %, vorzugsweise mindestens 300 %, und gegebenenfalls ein Rückstellvermögen von über 50 % (Test X) aufweist, wobei
- auf den Träger beidseitig jeweils eine Klebemassenschicht aus der erfindungsgemäßen Klebemasse aufgebracht ist, vorzugsweise auf Basis von hydrierten Vinylaromatenblockcopolymeren und Klebharzen, wobei weiter vorzugsweise die Zusammensetzung der Klebemassen identisch ist.

Weiterhin besonders vorteilhaft ist ein Selbstklebeprodukt bestehend aus
- einem einschichtigen Permanentträger (Zwischenträger), vorzugsweise enthaltend Polyolefin, wobei der Träger eine Reißdehnung von mindestens 100 %, vorzugsweise mindestens 300 %, und gegebenenfalls ein Rückstellvermögen von weniger 50 % (Test X) aufweist, wobei
- auf den Träger beidseitig jeweils eine Schicht aus der Haftklebemasse aufgebracht ist, vorzugsweise auf Basis von hydrierten Vinylaromatenblockcopolymeren und Klebharzen, wobei weiter vorzugsweise die Zusammensetzung der Klebemassen identisch ist.

Die allgemeinen Ausdrücke "Selbstklebeprodukt" und "Selbstklebeband" umfassen im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Selbstklebeprodukt weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sein können als die Dicke. Die Dicke ist über die gesamte durch Länge und Breite bestimmte Flächenausdehnung des Selbstklebeprodukts möglichst gleich, vorzugsweise im Wesentlichen gleich.

Typische Konfektionierformen der erfindungsgemäßen Selbstklebeprodukte sind Klebebandrollen sowie Selbstklebestreifen, wie sie zum Beispiel in Form von Stanzlingen erhalten werden.

Vorzugsweise weisen alle Schichten im Wesentlichen die Form eines Quaders auf. Weiter vorzugsweise sind alle Schichten vollflächig miteinander verbunden.

Optional kann ein nicht haftklebriger Anfasserbereich vorgesehen sein, von welchem aus der Ablöseprozess ausgeführt werden kann.

Das Selbstklebeprodukt weist vorzugsweise eine Dicke auf von 20 µm bis 2000 µm, weiter vorzugsweise von 30 bis 1500 µm, besonders vorzugsweise 50 bis 1000 µm oder 100 µm, 150 µm, 200 µm, 250 µm oder 500 µm, wobei das temporäre Trägermaterial nicht eingerechnet ist.

Bevorzugt ist eine Ausführungsform des Selbstklebeprodukts, bei dem der Permanentträger eine Dicke zwischen 20 und 100 µm, bevorzugt 30 µm bis 60 µm aufweist und die identischen Haftklebemasseschichten auf dem Permanentträger jeweils eine Dicke zwischen 20 und 100 µm, bevorzugt 30 µm bis 60 µm.

Bevorzugt ist zudem eine Ausführungsform des Selbstklebebands, bei dem kein Permanentträger enthalten ist und die Haftklebemasse als singuläre Schicht auf einem temporären Trägermaterial vorliegt. Die Haftklebemasseschicht weist eine Dicke zwischen 100 µm und 2000 µm, insbesondere zwischen 200 µm und 1500 µm oder zwischen 400 µm und 1200 µm auf.

Vorzugsweise lässt sich das erfindungsgemäße durch dehnendes Verstrecken wiederablösbare Selbstklebeprodukt entfernen, indem dieses bevorzugt im Wesentlichen in der Verklebungsebene, das heißt bei einem Abzugswinkel von etwa 0°, dehnend verstreckt wird, wodurch es sich rückstands- und zerstörungsfrei wiederablösen lässt. Eine Entfernung ist aber auch unter anderen Abzugswinkeln wie 45° oder 90° möglich.

### Herstellverfahren

Die Haftklebemasse für das erfindungsgemäße Selbstklebeprodukt wird entweder auf eine Seite eines temporären Trägermaterials oder auf eine Seite eines Permanentträgers aufgebracht. Die Haftklebemasse kann nach dem Fachmann bekannten Verfahren auf den Träger aufgebracht werden, beispielsweise mittels Rakelverfahren, Düsenrakelverfahren, Rollstabdüsenverfahren, Extrusionsdüsenverfahren, Gießdüsen- und Gießverfahren. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren. Eine bevorzugte Beschichtungsvariante ist lösemittelbasiert. Hierzu werden die Bestandteile der Haftklebemasse(n) in einem geeigneten Lösemittel oder Lösemittelgemisch aufgelöst und dann aus Lösung beschichtet und das beschichtete Material getrocknet. Geeignete Lösemittel, die auch in Kombination eingesetzt werden können, sind aliphatisch (beispielsweise Pentan, Hexan, Heptan, Octan und deren Strukturisomere), cycloaliphatische (beispielsweise Cyclohexan und Methylcyclohexan) und aromatische Kohlenwasserstoffe (beispielsweise Toluol, Xylol), insbesondere in Kombination mit Ketonen (beispielsweise Aceton, 2-Butanon, iso-Butylketon) oder Estern (beispielsweise Ethylacetat, Butylacetat, Propylacetat, iso-Propylacetat). In vorteilhafter Vorgehensweise wird eine Mischung aus Toluol und Ethylacetat verwendet. Sehr vorteilhaft ist eine Mischung aus Methylcyclohexan und einem Ester wie Ethylacetat oder insbesondere Butylacetat. Vorteilhaft ist zudem eine Mischung aus Cyclohexan und einem Ester, insbesondere Butylacetat.

Eine weitere bevorzugte Herstellvariante sind Hotmeltverfahren, bei denen die Haftklebemasse mittels eines Compoundieraggregats gemischt und insbesondere direkt im Anschluss ("inline") mittels Extrusion und/oder Düse und/oder Kalander auf das Trägermaterial aufgebracht wird. Es muss sich bei dem Verfahren zum Aufbringen jedoch nicht um eine Direktbeschichtung handeln. Die Haftklebemasse kann auch zunächst anderweitig beschichtet werden und in einem zweiten Schritt auf den Träger kaschiert werden. Gegebenenfalls können weitere Schichten oder Materiallagen anschließend inline oder offline zukaschiert oder beschichtet werden, so dass auch mehrschichtige /-lagige Produktaufbauten erzeugt werden können. Solche weiteren Schichten können spezielle zusätzliche Eigenschaften in das Klebeband einbringen wie zum Beispiel die mechanischen Eigenschaften. Sie können auch die Verankerung zwischen Klebemasse und Träger fördern oder die Migration einzelner Bestandteile aus einer Schicht in die andere unterdrücken.

Für Produktaufbauten mit Zwischenträgerschicht kann eine Haftklebemasseschicht durch direkte Beschichtung auf das Permanentträgermaterial oder durch Laminierung, insbesondere Heißlaminierung erfolgen.

### Verwendung

Die erfindungsgemäßen Selbstklebeprodukte eignen sich hervorragend für die langzeitstabile Permanentverklebung, bei denen eine hohe Wärmescherfestigkeit sowie eine Trennbarkeit des Verklebungsverbunds gefordert wird. Bedarf nach Trennbarkeit einer Permanentverklebung kann zu Umarbeitungszwecken (falls eine Verklebung im Herstellprozess eines Gegenstands korrigiert werden soll), zu Reparaturzwecken (falls ein schadhaftes Bauteil des Verklebungsverbunds ausgetauscht werden soll) oder zu Recyclingzwecken (falls nach Nutzungsdauer des Verklebungsverbunds sortenrein entsorgt werden soll) bestehen. Selbstklebemassen mit den hier beschriebenen Haftklebemassen haben sich darüber hinaus insbesondere in Verbindung mit niedrigenergetischen Oberflächen wie PP/EPDM, PP/EPM und PP/EPR als vorteilhaft erwiesen. Daher ist ein weiterer Gegenstand der vorliegenden Erfindung die Verwendung der erfindungsgemäßen Haftklebemasse oder des erfindungsgemäßen Klebebands zur Verklebung eines Substrats enthaltend Ethylen(Co)-Polymer, Propylen(Co)-Polymer, EPR, EPM und/oder EPDM oder auch eines anderen Kunststoffs. Insbesondere wird die erfindungsgemäße Haftklebemasse oder das erfindungsgemäße Klebeband zur Verklebung eines Anbauteils enthaltend Ethylen(Co)-Polymer, Propylen(Co)-Polymer, EPR, EPM und/oder EPDM oder auch eines anderen Kunststoffs wie ABS oder Polycarbonat in oder an einem Automobil/Fahrzeug verwendet. Die Langlebigkeit der erfindungsgemäßen Haftklebemasse erlaubt auch die Verklebung anderer Materialien wie Glas, Keramik und Metall.

Daher ist ein weiterer Gegenstand der vorliegenden Erfindung die Verwendung der erfindungsgemäßen Haftklebemasse oder des erfindungsgemäßen Klebebands zur Verklebung von anderen Substraten wie insbesondere anderen Kunststoffen und Metallen.

Langzeitstabilität wird durch erfindungsgemäße Nutzung hydrierter Polyvinylaromat-Polydien-Blockcopolymere, von denen eine gesteigerte Wärme-, UV- und Witterungsstabilität bekannt ist, erreicht (F.C. Jagisch und J. M. Tancrede in D. Satas, "Handbook of Pressure Sensitive Adhesive Technology", 3. Aufl., 1999, D. Satas & Associates, Warwick, S. 367, Tabelle 16-5).

Die vorliegende Erfindung wird anhand der folgenden Beispiele näher erläutert, wobei diese keinesfalls als Einschränkung des Erfindungsgedanken zu verstehen sind.

### Testmethoden

Die Messungen werden - soweit nicht ausdrücklich anders erwähnt - bei einem Prüfklima von 23 ± 1 °C und 50 ± 5 % rel. Luftfeuchte durchgeführt.

### Test I - Molmasse (GPC)

### (a) Peakmolmasse von einzelnen Blockcopolymermoden

Polymere sind im Hinblick auf die Molmassenverteilung polymodale Systeme. Mischungen aus verschiedenen Polymeren können als multimodale Systeme, wobei jedes Polymer eine eigene Molmassenverteilung einbringt, aufgefasst werden. Mischungen von Blockcopolymeren mit Strukturen unterschiedlicher Molmassenverteilung können ebenfalls als multimodale Systeme aufgefasst werden. Jedes Blockcopolymer bringt dann eine eigene Molmassenverteilung ein. Der Einfachheit werden diese hier Blockcopolymermode genannt.

GPC bietet sich als messtechnisches Verfahren zur Bestimmung der Molmasse einzelner Polymermoden in Gemischen verschiedener Polymere an. Für die im Sinne dieser Erfindung einsetzbaren durch lebende, anionische Polymerisation hergestellten Blockcopolymere sind die Molmassenverteilungen typischerweise ausreichend eng, so dass Polymermoden, die sich Triblockcopolymeren, Diblockcopolymeren oder Multiblockcopolymeren zuordnen lassen, ausreichend voneinander aufgelöst im Elugramm auftreten. Es lässt sich dann die Peakmolmasse für die einzelnen Polymermoden aus den Elugrammen ablesen.

Peakmolmassen (Peak-MM) werden mittels Gelpermeationschromatographie (GPC) bestimmt. Als Eluent wird THF eingesetzt. Die Messung erfolgt bei 23 °C. Als Vorsäule wird PSS-SDV, 5 µ, 10³ Å, ID 8,0 mm × 50 mm verwendet. Zur Auftrennung werden die Säulen PSS-SDV, 5 µ, 10³ Å sowie 10⁴ Å und 10⁶ Å mit jeweils ID 8,0 mm × 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt. (µ = µm; 1 Å = 10⁻¹⁰ m).

### (b) gewichtsmittlere Molmasse insbesondere von Weichmachern

Das gewichtsmittlere Molekulargewicht MW wird mittels Gelpermeationschromatographie (GPC) bestimmt. Als Eluent wird THF eingesetzt. Die Messung erfolgt bei 23 °C. Als Vorsäule wird PSS-SDV, 5 µ, 10³ Ä, ID 8,0 mm × 50 mm verwendet. Zur Auftrennung werden die Säulen PSS-SDV, 5 µ, 10³ Ä sowie 10⁴ Å und 10⁶ Å mit jeweils ID 8,0 mm × 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt.

### Test II - Klebkraft Stahl oder ABS

Die Bestimmung der Klebkraft (gemäß AFERA 5001) wird wie folgt durchgeführt. Als definierter Haftgrund wird eine polierte Stahlplatte mit einer Stärke von 2 mm eingesetzt. Das zu untersuchende verklebbare Flächenelement (50 µm Haftklebeschicht auf 36 µm geätzter Polyester-Folie ) wird, falls nicht anderweitig angegeben, auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

Statt der oben angegebenen Stahlplatte wird bei einigen Untersuchungen die Klebkraft auf einer Kunststoffplatte aus ABS bestimmt.

### Test III - Klebkraft PPIEPR

Die Bestimmung der Klebkraft (gemäß AFERA 5001) wird wie folgt durchgeführt. Als definierter Haftgrund wird eine PP/EPR-Platte mit einer Stärke von 2 mm eingesetzt. Das zu untersuchende verklebbare Flächenelement (50 µm Haftklebeschicht auf 36 µm geätzter Polyester-Folie) wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

Den Prüfuntergrund stellt in diesem Fall eine PP/EPR-Platte dar. Als Grundmaterial für die PP/EPR-Platten dient Hifax TRC 135X/4 Black der Firma LyondellBasell.

### Test IV - SAFT

Dieser Test dient der Schnellprüfung der Scherfestigkeit von Klebeformulierungen unter Temperaturbelastung. Dafür wird ein zu untersuchendes Prüfmuster auf eine temperierbare Stahlplatte geklebt, mit einem Gewicht (200 g) belastet und die Scherstrecke aufgezeichnet.

### Messprobenpräparation:

Das zu untersuchende Prüfmuster (50 µm Transfertape wird, falls nicht anderweitig angegeben, mit einer der Klebemassenseiten auf eine 50 µm dicke Aluminiumfolie geklebt. Das so präparierte Prüfmuster wird auf eine Größe von 10 mm * 50 mm geschnitten.

Die zugeschnittene Klebebandprobe wird mit der anderen Klebemassenseite auf eine polierte, mit Aceton gereinigte Prüfplatte (Werkstoff 1.4301, DIN EN 10088-2, Oberfläche 2R, Oberflächen-Rauigkeit Rₐ = 30 bis 60 nm, Abmessungen 50 mm * 13 mm * 1,5 mm) derart verklebt, dass die Verklebungsfläche der Probe Höhe * Breite = 13 mm * 10 mm beträgt und die Prüfplatte am oberen Rand um 2 mm überragt. Anschließend wird mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Platte derart aufgehängt, dass das länger überstehende Ende des Prüfmusters senkrecht nach unten zeigt.

### Messung:

Die zu messende Probe wird am unteren Ende mit einem Gewicht von 200 g belastet. Die Prüfplatte mit der verklebten Probe wird beginnend bei 25 °C mit einer Rate von 9 K/min auf die Endtemperatur von 200 °C aufgeheizt.

Beobachtet wird der Rutschweg der Probe mittels Wegmessfühler in Abhängigkeit von Temperatur und Zeit. Der maximale Rutschweg ist auf 1000 µm (1 mm) festgelegt, bei Überschreiten wird der Test abgebrochen und die Versagenstemperatur notiert. Prüfklima: Raumtemperatur 23 +/- 3 °C, relative Luftfeuchtigkeit 50 +/- 5%. Das Ergebnis ist der Mittelwert aus zwei Einzelmessungen und wird in °C angegeben.

### Test V - Reißerbeständigkeit

Für die Reißerbeständigkeitstests wurden folgendermaßen Klebebandmuster hergestellt. Haftklebebeschichtungen in 50 µm wurden beidseitig auf eine 30 µm dicke Polyesterpolyurethan-Folie laminiert, die hierfür von der Schutzfolie befreit wurde. Diese Laminate wurden im dreischichtigen Aufbau untersucht. Transfer-Tape-Muster mit höherer Schichtdicke wurden als einschichtige Klebestreifenmuster getestet. Aus dem zu untersuchenden Klebeband werden 10 Streifen in jeweils 10 mm Breite und 40 mm Länge gestanzt. Diese Streifen werden auf einer Länge von 30 mm auf eine mit Ethanol konditionierte Polycarbonat-Platte geklebt, so dass ein 10 mm langer Anfasser übersteht. Eine zweite Polycarbonat-Platte wird auf die zweite Seite der verklebten Streifen aufgebracht, und zwar so, dass die beiden Polycarbonat-Platten bündig übereinander liegen. Der Verbund wird mit einer 4 kg Rolle 10-fach überrollt (fünfmal hin und zurück). Nach 24 h Aufziehzeit werden die Streifen am Anfasser manuell im 180°-Winkel aus der Klebfuge gestrippt.

Es wird bewertet, wie viele Muster rückstandsfrei wieder abgelöst werden können. Reißerbeständigkeit wird prozentual im Hinblick auf gerissene Klebestreifen angegeben. 0 % entspricht dabei dem Fall, dass von 10 Klebestreifen keiner beim durch dehnendes Verstrecken durchgeführten Ablöseversuch gerissen ist. 80 % entspricht dabei dem Fall, dass von 10 Klebestreifen 8 Klebestreifen beim durch dehnendes Verstrecken durchgeführten Ablöseversuch gerissen sind.

### Test VI - (Kleb)Harzerweichungstemperatur

Für Einzelsubstanzen: Die (Kleb)Harzerweichungstemperatur (Erweichungspunkt; Erw.-Punkt) wird nach der einschlägigen Methodik durchgeführt, die als Ring & Ball bekannt ist und nach ASTM E28 standardisiert ist.

### Test VII - DACP

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5 %, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99 %, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Firma Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

### Test VIII - MMAP

In ein trockenes Probenglas werden 5,0 g Testsubstanz (das zu untersuchende Klebharzmuster) eingewogen und mit 10 mL trockenem Anilin (CAS [62-53-3], ≥ 99,5 %, Sigma-Aldrich #51788 oder vergleichbar) und 5 mL trockenem Methylcyclohexan (CAS [108-87-2], ≥ 99 %, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Firma Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

### Test IX - Stripkraft

Die Ablösekraft (Stripkraft beziehungsweise Stripspannung) wird mit Hilfe einer Klebstofffolie mit den Abmessungen 50 mm Länge × 20 mm Breite mit einem am oberen Ende nicht haftklebrigem Anfasserbereich ermittelt. Die Klebstofffolie wird zwischen zwei deckungsgleich zueinander angeordneten Stahlplatten mit einer Abmessung von 50 mm × 30 mm mit einem Anpressdruck von jeweils 50 Newton verklebt. Die Stahlplatten haben an ihrem unteren Ende je eine Bohrung zur Aufnahme eines S-förmigen Stahlhakens. Das untere Ende des Stahlhakens trägt eine weitere Stahlplatte, über die die Prüfanordnung zur Messung in der unteren Klemmbacke einer Zugprüfmaschine fixiert werden kann. Die Verklebungen werden für eine Dauer von 24 Stunden bei +40 °C gelagert. Nach der Rekonditionierung auf Raumtemperatur wird der Klebfolienstreifen mit einer Zuggeschwindigkeit von 1000 mm pro Minute parallel zur Verklebungsebene und kontaktfrei zu den Kantenbereichen der beiden Stahlplatten herausgelöst. Dabei wird die erforderliche Ablösekraft in Newton (N) gemessen. Angegeben wird der Mittelwert der Stripspannungswerte (in N pro mm²), gemessen in dem Bereich, in welchem der Klebestreifen auf einer Verklebungslänge zwischen 10 mm und 40 mm von den Stahluntergründen abgelöst ist.

### Test X - Dehnbarkeit, Rückstellvermögen

Zur Messung des Rückstellvermögens werden die Selbstklebestreifen um 100 % gedehnt, in dieser Dehnung für 30 s gehalten und dann entspannt. Nach einer Wartezeit von 1 min wird erneut die Länge gemessen.

Das Rückstellvermögen berechnet sich nun wie folgt: RV = ((L₁₀₀ - L_{end} )/L₀ )·100 mit RV = Rückstellvermögen in %.

L₁₀₀: Länge des Klebestreifens nach der Dehnung um 100 % L₀: Länge des Klebestreifens vor der Dehnung L_{end}: Länge des Klebestreifens nach der Relaxation von 1 min.

Das Rückstellvermögen entspricht dabei der Elastizität.

Die Reißdehnung, die Zugfestigkeit und die Spannung bei 50 % Dehnung werden in Anlehnung an DIN 53504 unter Verwendung von Schulterstäben der Größe S3 bei einer Separationsgeschwindigkeit von 300 mm pro Minute gemessen. Das Prüfklima beträgt 23 °C und 50 % rel. Luftfeuchtigkeit.

### Test XI - Polyvinylaromaten-Anteil

Der Anteil an Polyvinylaromaten-Blöcken in hydrierten Polyvinylaromat-Polydien-Blockcopolymeren wird, sofern nicht anderweitig bekannt, mittels ¹³C-NMR bestimmt. Am Beispiel der Bestimmung des Polystyrol-Anteils in hydrierten Polystyrol-Polydien-Blockcopolymeren (SEBS) wird die ¹³C-NMR im Folgenden erläutert. Aus dem ¹³C-Spektrum wird der Mittelwert aus zwei Integralen gebildet, nämlich dem Styrol-C-Signal bei ca. 144 bis 146 ppm und dem Styrol-CH bei ca. 125 bis 127 ppm entsprechend. Dieser Mittelwert wird für SEBS in Relation zum Butylen-Integral (hydrierte 1,2-Polybutadien-Wiederholungseinheiten), nämlich dem CH3-Signal bei ca. 10 ppm, und zum Ethylen-Integral (hydrierte 1,4-Polybutadien-Wiederholungseinheiten), den man aus dem gesamtolefinischen Integral bei ca. 20 bis 50 ppm ausrechnen kann, gesetzt. Die so erhaltenen Anteile in mol-% werden dann in Gew.-% umgerechnet.

### I. Verwendete Rohmaterialien

**Tabelle 2: verwendete Chemikalien**

| **Komponente** | **Chemikalie** | **Beschreibung** | **Hersteller** |
|---|---|---|---|
| Elastomer | Kraton G1652 | SEBS; | Kraton Corp. |
| | | PS-Anteil 30 Gew.-% | |
| | | Diblock-Anteil: 0 Gew.-% | |
| | | Peak-MW*: 71.000 g/mol | |
| | Kraton G1650 | SEBS; | Kraton Corp. |
| | | PS-Anteil 30 Gew.-%; | |
| | | Diblock-Anteil: 0 Gew.-% | |
| | | Peak-MW*: 89.000 g/mol | |
| | Kraton G1654 | SEBS; | Kraton Corp. |
| | | PS-Anteil 31 Gew.-%; | |
| | | Diblock-Anteil: 0 Gew.-% | |
| | | Peak-MW*: 160.000 g/mol | |
| | Kraton G1651 | SEBS; | Kraton Corp. |
| | | PS-Anteil 33 Gew.-%; | |
| | | Diblock-Anteil: 0 Gew.-% | |
| | | Peak-MW*: 210.000 g/mol | |
| | Kraton G1633 | SEBS; | Kraton Corp. |
| | | PS-Anteil 30 Gew.-%; | |
| | | Diblock-Anteil: 0 Gew.-% | |
| | | Peak-MW*: 365.000 g/mol | |
| | Kraton G1657 | SEBS; | Kraton Corp. |
| | | PS-Anteil 13 Gew.-%; | |
| | | Diblock-Anteil: 29 Gew.-% | |
| | | Peak-MW*: 120.000 g/mol | |
| | Kraton G1642 | SEBS; | Kraton Corp. |
| | | PS-Anteil 21 Gew.-%; | |
| | | Diblock-Anteil: 0 Gew.-% | |
| | | Peak-MW*: 112.000 g/mol | |
| | | Ethylen-Gehalt: <50 Gew.-% | |
| | Septon 2063 | SEPS; | Kuraray Co. |
| | | PS-Anteil 13 Gew.-%; | |
| | | Diblock-Anteil: ca. 55 Gew.-% | |
| | | Peak-MW*: 165.000 g/mol | |
| | Kraton G1726 | SEBS; | Kraton Corp. |
| | | PS-Anteil 30 Gew.-%; | |
| | | Diblock-Anteil: 70 Gew.-% | |
| | | Peak-MW*: 65.000 g/mol | |
| Harz | Eastotac H100W | C₅ KW-Harz; | Eastman Chemical |
| | | Erw.-Punkt: 100 °C | |
| | | MMAP: 82 °C | |
| | | DACP: 82 °C | |
| | | Vollhydriert | |
| | Regalite R1125 | C₉ KW-Harz; | Eastman Chemical |
| | | Erw.-Punkt: 125 °C | |
| | | MMAP: 88 °C | |
| | | DACP: 56 °C | |
| | | Vollhydriert | |
| | Regalite R1100 | C₉ KW-Harz; | Eastman Chemical |
| | | Erw.-Punkt: 100 °C | |
| | | MMAP: 75 °C | |
| | | DACP: 45 °C | |
| | | Vollhydriert | |
| | Regalite R1090 | C₉ KW-Harz; | Eastman Chemical |
| | | Erw.-Punkt: 90 °C | |
| | | MMAP: 77 °C | |
| | | DACP: 39 °C | |
| | | Vollhydriert | |
| | Dercolyte A115 | Alpha-Pinen-Harz | DRT |
| | | Erw.-Punkt: 115 °C | |
| | | MMAP: 80 °C | |
| | | DACP: 28 °C | |
| | Foral 105E | Pentaerythritester des hydrierten Kolophoniums | Eastman Chemical |
| | | Erw.-Punkt: 105 °C | |
| | | MMAP: 16 °C | |
| | | DACP: -50 °C | |
| Weichmacher | Kraton G1750 | Ethylen-Propylen-Copolymer | Kraton Corp. |
| | | Peak-MW: 390.000 g/mol | |
| | | MW: 365.000 g/mol | |
| | TerPIB 2600 | Polybuten | ter Hell |
| | | Peak-MW: 11.000 g/mol | |
| | | MW: 9.200 g/mol | |
| | TerPIB 1300 | Polybuten | ter Hell |
| | | Peak-MW: 3.500 g/mol | |
| | | MW: 3.700 g/mol | |
| | TerPIB 950 | Polybuten | ter Hell |
| | | Peak-MW: 2.100 g/mol | |
| | | MW: 2.500 g/mol | |
| | Regalite R1 010 | Flüssiges hydriertes KW-Harz | Eastman Chemical |
| | | Peak-MW: 900 g/mol | |
| | | MW: 1.000 g/mol | |
| | Pionier 2070P | naphthenisches Mineralöl | Hansen & Rosenthal |
| | | Peak-MW: 950g/mol | |
| | | MW: 920 g/mol | |
| | Indopol H6000 | Polybuten | Ineos |
| | | Peak-MW: 16.000 g/mol | |
| | | MW: 15.900 g/mol | |
| | Oppanol B10 | Polyisobutylen | BASF |
| | | Peak-MW: 33.000 g/mol | |
| | | MW: 43.700 g/mol | |
| | Foralyn 5020 | Methylester des hydrierten Kolophoniums | Eastman Chemical |
| | | Peak-MW: 230 g/mol | |
| | | MW: 240 g/mol | |

- SEPS:: Styrol-Ethylen/Propylen-Styrol-Blockcopolymer
- SEP:: Styrol-Ethylen/Propylen-Blockcopolymer
- SEBS:: Styrol-Ethylen/Butylen-Styrol-Blockcopolymer
- PS-Anteil:: Polystyrolanteil
- Peak-MW:: Peak-Molekulargewicht
- Peak-MW*:: Peak-Molekulargewicht des Triblockcopolymers
- Peak-MW**:: Peak-Molekulargewicht des radialen Blockcopolymers
- KW-Harz:: Kohlenwasserstoffharz
- Erw.-Punkt:: Erweichungspunkt
- MW:: gewichtsmittleres Molekulargewicht

Als Permanentträger wurde eine 30 µm dicke Polyesterpolyurethan-Folie mit einer Reißdehnung von 650 % vom Typ Platilon U04 der Firma Covestro AG verwendet.

### II. Versuche

Es wurde eine Reihe von Testklebebandmuster erzeugt.

### Verfahren V1 (Lösemittel-Verfahren):

Die Bestandteile der Haftklebemassen wurden hierbei 30%ig in Siedegrenzenbenzin/Toluol/Aceton gelöst und mit einem Streichbalken entweder auf eine PET-Folie ausgerüstet mit einem trennenden Silikon oder auf eine geätzte PET-Folie in der gewünschten Schichtdicke ausgestrichen, anschließend bei 100 °C für 15 min das Lösungsmittel abgedampft und so die Masseschicht getrocknet.

### Verfahren V2 (Hotmelt-Verfahren):

Die lösungsmittelfreie Herstellung von Haftklebeformulierungen erfolgte mittels eines Planetwalzenextruders (PWE), welcher einen Einzugsbereich und zwei Verfahrensteile umfasste. Die Anlaufringe hatten in Verfahrensrichtung einen zunehmenden Durchmesser. Obwohl unterschiedliche Spindelbestückungen geeignet waren, wurden Bestückungen bevorzugt, welche im ersten Verfahrensteil mindestens ¾ der maximalen Bestückungszahl betrugen. Die Elastomerkomponenten wurden im Einzug des PWEs dosiert. Die Harzkomponenten wurden aufgeschmolzen und im ersten Verfahrensteil des PWEs zugegeben. Besonders geeignet zur Herstellung von homogenen Mischungen war ein Harz-Split, in dem ein Teil des Harzes im Einzugsbereich zugegeben wurde und der Rest downstream im ersten Verfahrensteil. Besonders geeignet war dabei die Zugabe beider Anteile flüssig über Sidefeed oder Anlaufringe, wobei der erste Anteil ca. 30 Gew.-% der gesamten Harzmenge beträgt, und soweit nicht anders angegeben, wurde das Verfahren so ausgeführt. Geeignet wäre auch die Zugabe des ersten Harzanteils fest im Einzug des PWEs oder über Sidefeed im Einzugsbereich.

Die Beschichtung erfolgte durch Einführung des heißen Haftklebemassencompounds in einen 2-Walzenkalander.

**Tabelle 2 zeigt die Parameter des Hotmelt-Verfahrens.**

| | |
|---|---|
| Durchsatz Summe Elastomerkomponenten | 10 kg/h |
| Temp. PWE-Zentralspindel | 50 °C |
| Temp. PWE-Zonen | 160 °C / 160 °C / 160 °C |
| PWE-Drehzahl | 30 U Imin |
| Temp. Kalanderwalzen | 180 °C / 180 °C |

Dann wurden die in den Tabellen aufgeführten Eigenschaften getestet.

### Beispiele ("E": erfindungsgemäß; "V": Vergleich)

### (i) mehrschichtige, trägerhaltige Produktaufbauten

| | E1.1 | E1.2 | E1.3 | E1.4 | E1.5 | E1.6 |
|---|---|---|---|---|---|---|
| Kraton G1651 | | | | | | |
| Kraton G1654 | 40,0 % | 40,0 % | 40,0 % | 40,0 % | | 30,0 % |
| Kraton G1726 | 10,0 % | 15,0 % | 10,0 % | 15,0 % | | |
| Kraton G 1633 | | | | | 30,0 % | |
| | | | | | | |
| Regalite R1125 | | 40,0 % | 40,0 % | | | |
| Eastotac H100W | 45,0 % | | | | 43,0 % | 43,0 % |
| Dercolyte A115 | | | | 40,0 % | | |
| | | | | | | |
| Regalite R1010 | | | | | | |
| Ter Pib 2600 | | 5,0 % | 10,0 % | 5,0 % | 27,0 % | 27,0 % |
| Kraton G1750 | 5,0 % | | | | | |

| | | | | | | |
|---|---|---|---|---|---|---|
| Angaben in % sind jeweils Gew.-% | | | | | | |

| | | | | | | |
|---|---|---|---|---|---|---|
| Reißerquote Manuell (PC/PC)* | 10% | 0 % | 18% | 0 % | 0 % | 20 % |
| SAFT (200 g)** | 171,5 °C | 177,5 °C | 127,3 °C | 203,0 °C | 137,0 °C | 117,0 °C |
| Klebkraft Stahl, frisch** | 5,5 N/cm | 6,9 N/cm | 7,6 N/cm | 5,5 N/cm | 4,0 N/cm | 8,9 N/cm |
| Klebkraft PP/EPR** | 3,6 N/cm | 3,8 N/cm | 6,7 N/cm | 4,8 N/cm | 8,1 N/cm | 7,2 N/cm |

| | | | | | | |
|---|---|---|---|---|---|---|
| *) 2x 50 µm auf 30 µm Polyesterpolyurethan-Folie **) 50 µm auf 36 µm Polyester-Folie | | | | | | |

| | V2.1 | V2.2 | V2.3 | V2.4 | V2.5 | V2.6 |
|---|---|---|---|---|---|---|
| Kraton G1657 | 28,0 % | 29,2 % | 28,0 % | 50% | | |
| Kraton G1650 | 12,0 % | 12,5% | 12,0 % | | | 50% |
| Septon 2063 | | | | | 50% | |
| Regalite R1100 | 26,0 % | 50,0 % | 26,0 % | | 50% | 50 % |
| Regalite R1090 | | | | 50% | | |
| Regalite R1010 | 34,0 % | 8,3 % | | | | |
| Pionier 2070P | | | 34,0 % | | | |

| | | | | | | |
|---|---|---|---|---|---|---|
| Angaben in % sind jeweils Gew.-% | | | | | | |

| | | | | | | |
|---|---|---|---|---|---|---|
| Reißerquote Manuell (PC/PC)* | 95 % | 100 % | 100 % | 67,5 % | Nicht bestimmt | 60 % |
| SAFT (200 g)** | 94 °C | 106 °C | 80 °C | 91 °C | 96 °C | 160 °C |
| Klebkraft Stahl** | 5,1 N/cm | 7,1 N/cm | 0,3 N/cm | 6,2 N/cm | 11,4 N/cm | 6,7 N/cm |
| Klebkraft PP/EPR** | 4,2 N/cm | 1,5 N/cm | 0,4 N/cm | 3,9 N/m | 9,7 N/cm | 3,7 N/cm |

| | | | | | | |
|---|---|---|---|---|---|---|
| *) 2x 50 µm auf 30 µm Polyesterpolyurethan-Folie **) 50 µm auf 36 µm Polyester-Folie | | | | | | |

| | E3.1 | E3.2 | V3.3 | V3.4 | E3.5 |
|---|---|---|---|---|---|
| Kraton G1652 | | | 40 % | | |
| Kraton G1650 | | | | 40 % | |
| Kraton G1654 | 40% | | | | 55% |
| Kraton G1651 | | 40 % | | | |
| Kraton G1726 | 10% | 10% | 10% | 10% | |
| | | | | | |
| Regalite R1100 | 45% | 45% | 45% | 45% | 40 % |
| | | | | | |
| Kraton G1750 | 5% | 5% | 5% | 5% | 5% |
| | | | | | |

| | | | | | |
|---|---|---|---|---|---|
| Angaben in % sind jeweils Gew.-% | | | | | |

| | | | | | |
|---|---|---|---|---|---|
| Reißerquote Manuell (PC/PC)* | 0 % | 20 % | 0 % | 0 % | 20 % |
| SAFT (200 g)** | 192 °C | 203 °C | 110 °C | 131 °C | 180 °C |
| Klebkraft Stahl** | 6,3 N/cm | 5,7 N/cm | 2,2 N/cm | 2,5 N/cm | 5,1 N/cm |
| Klebkraft PP/EPR** | 2,2 N/cm | 3,7 N/cm | 0,1 N/cm | 1,3 N/cm | 2,9 N/cm |

| | | | | | |
|---|---|---|---|---|---|
| *) 2x 50 µm auf 30 µm Polyesterpolyurethan-Folie **) 50 µm auf 36 µm Polyester-Folie | | | | | |

| | E4.1 | E4.2 | E4.3 | V4.4 | E4.5 |
|---|---|---|---|---|---|
| Kraton G1654 | 40 % | 40 % | 40 % | | 40 % |
| Kraton G1651 | | | | 20 % | |
| Kraton G1726 | 10 % | 10 % | 10 % | | 10 % |
| | | | | | |
| Regalite R1100 | 30 % | 35 % | 50 % | | 35 % |
| Foral 105-E | | | | | 10 % |
| Eastotac H100W | | | | 42 % | |
| | | | | | |
| TerPib 2600 | 20 % | 15 % | | 38 % | 5 % |
| | | | | | |

| | | | | | |
|---|---|---|---|---|---|
| Angaben in % sind jeweils Gew.-% | | | | | |

| | | | | | |
|---|---|---|---|---|---|
| Reißerquote Manuell (PC/PC)* | 20 % | 0 % | 10 % | 33 % | 10 % |
| SAFT (200 g)** | 180 °C | 125 °C | 191 °C | 112 °C | 179 °C |
| Klebkraft Stahl** | 6,2 N/cm | 5,1 N/cm | 7,9 N/cm | 14,2 N/cm | 6,4 N/cm |
| Klebkraft PP/EPR** | 5,6 N/cm | 3,3 N/cm | 5,6 N/cm | 9,4 N/cm | 5,8 N/cm |

| | | | | | |
|---|---|---|---|---|---|
| *) 2x 50 µm auf 30 µm Polyesterpolyurethan-Folie **) 50 µm auf 36 µm Polyester-Folie | | | | | |

| | E5.1 | E5.2 | E5.3 | E5.4 | E5.5 |
|---|---|---|---|---|---|
| Kraton G1654 | 40 % | 40 % | 40 % | 40 % | 40 % |
| Kraton G1726 | 10 % | 10 % | 10 % | 10 % | 10 % |
| | | | | | |
| Regalite R1100 | 45 % | 45 % | 45 % | 45 % | 35 % |
| Foral 105-E | | | | | 10% |
| Oppanol B10 | 5 % | | | | |
| TerPib 950 | | 5 % | | | |
| TerPib 1300 | | | 5 % | | |
| Indopol H6000 | | | | 5 % | |
| Foralyn 5020 | | | | | 5 % |

| Reißerquote Manuell (PC/PC)* | 10 % | 20 % | 0 % | 20 % | 20 % |
|---|---|---|---|---|---|
| SAFT (200 g)** | 171 °C | 124 °C | 198 °C | 172 °C | 177 °C |
| Klebkraft Stahl** | 4,8 N/cm | 5,5 N/cm | 4,9 N/cm | 5,4 N/cm | 6,6 N/cm |
| Klebkraft PP/EPR** | 2,7 N/cm | 5,0 N/cm | 3,8 N/cm | 3,8 N/cm | 5,5 N/cm |

| | | | | | |
|---|---|---|---|---|---|
| Angaben in % sind jeweils Gew.-% *) 2x 50 µm auf 30 µm Polyesterpolyurethan-Folie **) 50 µm auf 36 µm Polyester-Folie | | | | | |

| | V6.1 | V6.2 | V6.3 | V6.4 |
|---|---|---|---|---|
| Kraton G1654 | 30 % | 20 % | 45 % | |
| Kraton G1726 | 20 % | 5 % | 15 % | |
| Kraton G1642 | | | | 30 % |
| | | | | |
| Regalite R1100 | 45 % | 45 % | 35 % | |
| Regalite R1090 | | | | 40 % |
| | | | | |
| Kraton G1750 | 5 % | | | |
| Terpib 2600 | | 30 % | 5 % | |
| Oppanol B10 | | | | 30 % |
| | | | | |

| | | | | |
|---|---|---|---|---|
| Angaben in % sind jeweils Gew.-% | | | | |

| Reißerquote Manuell (PC/PC)* | 100 % | | | 100 % |
|---|---|---|---|---|
| SAFT (200 g)** | 83 °C | | | |
| Klebkraft Stahl** | 1,4 N/cm | | | |
| Klebkraft PP/EPR** | 4,3 N/cm | | | |

| | | | | |
|---|---|---|---|---|
| *) 2x 50 µm auf 30 µm Polyesterpolyurethan-Folie **) 50 µm auf 36 µm Polyester-Folie | | | | |

### (ii) Einschichtige Produktaufbauten

| | E7.1 | E7.2 | E7.3 | E7.4 |
|---|---|---|---|---|
| Kraton G1654 | 40 % | 37 % | 35 % | 35 % |
| Kraton G1726 | 15 % | 15 % | 15 % | 15 % |
| | | | | |
| Regalite R1100 | 40 % | 43 % | 45 % | 31,5 % |
| Regalite R1125 | | | | 13,5 % |
| | | | | |
| TerPib 2600 | 5 % | 5 % | 5 % | 5 % |
| | | | | |
| Schichtdicke | 530 µm | 1080 µm | 510 µm | 500 µm |
| | | | | |

| | | | | |
|---|---|---|---|---|
| Angaben in % sind jeweils Gew.-% | | | | |

| Reißerquote Manuell (PC/PC) | 0 % | 0 % | 0 % | 0 % |
|---|---|---|---|---|
| SAFT (200 g) | 162 °C | 157 °C | 138 °C | 165 °C |
| Klebkraft Stahl* | 14,4 N/cm | 23,8 N/cm | 18,3 N/cm | 24,3 N/cm |
| Klebkraft ABS* | 12,7 N/cm | 19,8 N/cm | 14,5 N/cm | 16,5 N/cm |

| | | | | |
|---|---|---|---|---|
| *) auf 75 µm Polyester-Folie | | | | |

## Patentansprüche

1. Durch dehnendes Verstrecken wiederablösbares Selbstklebeprodukt, das zumindest eine Schicht einer Haftklebemasse enthält, enthaltend:
a) mindestens 28 Gew.-% und höchstens 58 Gew.-% einer Elastomerkomponente, wobei
i. die Elastomerkomponente zumindest 60 Gew.-% und bevorzugt höchstens 90 Gew.-%, jeweils bezogen auf die Elastomerkomponente, ein hydriertes Polyvinylaromat-Polydien-Blockcopolymer mit einem Polyvinylaromatenanteil von mindestens 18 Gew.-% und einem Peak-Molekulargewicht von 100.000 bis 500.000 g/mol, bestimmt gemäß GPC (Test I), enthält,
ii. die Polydien-Blöcke im Wesentlichen voll hydriert sind,
iii. das hydrierte Polyvinylaromat-Polydien-Blockcopolymer einen ABA-Aufbau, (AB)ₙZ-Aufbau mit n = 2 oder radialen (AB)ₙ-Aufbau oder radialen (AB)ₙ-Z-Aufbau mit n ≥ 3 aufweist, wobei A = Polyvinylaromat, B = Ethylen und Butylen oder Ethylen und Propylen und Z = Derivat einer Kopplungssubstanz sind und wobei der Ethylen-Anteil in den B-Blöcken bevorzugt mindestens 50 Gew.-% beträgt, und
iv. die Elastomerkomponente bis zu 35 Gew.-% bezogen auf die Elastomerkomponente zumindest eine Sorte eines hydrierten Diblockcopolymers mit einem A'B`-Aufbau oder (A'B')ₙZ-Aufbau mit n = 1 enthält, wobei A' = Polyvinylaromat, B' = Ethylen und Butylen oder Ethylen und Propylen, Z = Derivat einer Kopplungssubstanz ist und A' = A bzw. B' = B sein kann,
b) eine Klebharzkomponente,
c) optional eine Weichmacherkomponente,
d) optional weitere Zuschlagsstoffe,
wobei sich der Anteil der Elastomerkomponente auf das Gesamtgewicht der Haftklebemasse bezieht sowie
zumindest eine Lage eines temporären Trägermaterials ("Trennliner").

2. Durch dehnendes Verstrecken wiederablösbares Selbstklebeprodukt, das zumindest eine Schicht einer Haftklebemasse enthält, enthaltend:
a) mindestens 28 Gew.-% und höchstens 58 Gew.-% einer Elastomerkomponente, wobei
i. die Elastomerkomponente zumindest 60 Gew.-% und bevorzugt höchstens 90 Gew.-%, jeweils bezogen auf die Elastomerkomponente, ein hydriertes Polyvinylaromat-Polydien-Blockcopolymer mit einem Polyvinylaromatenanteil von mindestens 18 Gew.-% und einem Peak-Molekulargewicht von 100.000 bis 500.000 g/mol, bestimmt gemäß GPC (Test I), enthält,
ii. die Polydien-Blöcke im Wesentlichen voll hydriert sind,
iii. das hydrierte Polyvinylaromat-Polydien-Blockcopolymer einen ABA-Aufbau, (AB)ₙZ-Aufbau mit n = 2 oder radialen (AB)ₙ-Aufbau oder radialen (AB)ₙ-Z-Aufbau mit n ≥ 3 aufweist, wobei A = Polyvinylaromat, B = Ethylen und Butylen oder Ethylen und Propylen und Z = Derivat einer Kopplungssubstanz sind und wobei der Ethylen-Anteil in den B-Blöcken bevorzugt mindestens 50 Gew.-% beträgt, und
iv. optional die Elastomerkomponente bis zu 35 Gew.-% bezogen auf die Elastomerkomponente zumindest eine Sorte eines hydrierten Diblockcopolymers mit einem A'B`-Aufbau oder (A'B')ₙZ-Aufbau mit n = 1 enthält, wobei A' = Polyvinylaromat, B' = Ethylen und Butylen oder Ethylen und Propylen, Z = Derivat einer Kopplungssubstanz ist und A' = A bzw. B' = B sein kann,
b) eine Klebharzkomponente,
c) eine Weichmacherkomponente zu mindestens 2 Gew.-% und maximal 30 Gew.-% und
d) optional weitere Zuschlagsstoffe,
wobei sich der Anteil der Elastomerkomponente auf das Gesamtgewicht der Haftklebemasse bezieht sowie
zumindest eine Lage eines temporären Trägermaterials ("Trennliner").

3. Durch dehnendes Verstrecken wiederablösbares Selbstklebeprodukt nach Anspruch 1 oder 2,
**dadurch gekennzeichnet, dass**
das Selbstklebeprodukt neben der zumindest einen Lage eines temporären Trägermaterials ("Trennliner") zumindest eine Lage eines dehnbaren Permanentträgermaterials aufweist.

4. Durch dehnendes Verstrecken wiederablösbares Selbstklebeprodukt nach zumindest einem der Ansprüche 1 bis 3,
**dadurch gekennzeichnet, dass**
der Anteil an Elastomerkomponente in der Schicht der Haftklebemasse 35 Gew.-% bis 55 Gew.-% beträgt, vorzugsweise 40 Gew.-% bis 52 Gew.-% jeweils bezogen auf das Gesamtgewicht der Haftklebemasse.

5. Durch dehnendes Verstrecken wiederablösbares Selbstklebeprodukt nach zumindest einem der vorherigen Ansprüche,
**dadurch gekennzeichnet, dass**
die Polyvinylaromat-Polydien-Blockcopolymere einen Polyvinylaromatenteil von 18 Gew.-% bis 35 Gew.-%, vorzugsweise von 20 Gew.-% bis 33 Gew.-% aufweisen.

6. Durch dehnendes Verstrecken wiederablösbares Selbstklebeprodukt nach zumindest einem der vorherigen Ansprüche,
**dadurch gekennzeichnet, dass**
die Elastomerkomponente zusätzlich zu einem hydrierten Polyvinylaromat-Polydien-Blockcopolymer mit einem linearen oder radialen Aufbau ein Polyvinylaromat-Polydien-Diblockcopolymer A'B' enthält, wobei weiter vorzugsweise A' = A und B' = B ist und die Polydienblöcke im Wesentlichen voll hydriert sind.

7. Durch dehnendes Verstrecken wiederablösbares Selbstklebeprodukt nach Anspruch 6,
**dadurch gekennzeichnet, dass**
die Elastomerkomponente zumindest ein Diblockcopolymer mit einem Peak-Molekulargewicht, bestimmt mittels GPC, von < 100.000 g/mol aufweist und sein Anteil bezogen auf die Elastomerkomponente höchstens 35 Gew.-%, bevorzugt 10 Gew.-% bis 25 Gew.-% beträgt.

8. Durch dehnendes Verstrecken wiederablösbares Selbstklebeprodukt nach zumindest einem der vorherigen Ansprüche,
**dadurch gekennzeichnet, dass**
der Anteil an Klebharzkomponente 28 bis 55 Gew.-%, vorzugsweise 35 Gew.- bis 50 Gew.-%, jeweils bezogen auf das Gesamtgewicht der Haftklebemasse, beträgt.

9. Durch dehnendes Verstrecken wiederablösbares Selbstklebeprodukt nach zumindest einem der vorherigen Ansprüche,
**dadurch gekennzeichnet, dass**
es sich bei der Klebeharzkomponente um partiell oder vollständig hydriertes Harz auf Basis des Dicyclopentadiens, partiell, oder vollständig hydrierte Kohlenwasserstoffharze auf Basis von C₅, C₅/C₉- oder C₉-Monomerströmen, Polyterpenharze auf Basis von α-Pinen und/oder β-Pinen und δ-Limonen oder ein hydriertes Polymerisat reiner C₈-oder C₉-Aromaten handelt, wobei das Harz partiell oder vollständig hydriert ist.

10. Durch dehnendes Verstrecken wiederablösbares Selbstklebeprodukt nach zumindest einem der vorherigen Ansprüche,
**dadurch gekennzeichnet, dass**
der Anteil an Weichmacher in der Haftklebemasse nicht mehr als 30 Gew.-%, vorzugsweise 2 bis 20 Gew.-%, besonders bevorzugt 4 bis 15 Gew.-% beträgt, jeweils bezogen auf das Gesamtgewicht der Haftklebemasse.

11. Durch dehnendes Verstrecken wiederablösbares Selbstklebeprodukt nach zumindest einem der vorherigen Ansprüche,
**dadurch gekennzeichnet, dass**
der Weichmacher ausgewählt ist aus der Gruppe bestehend aus Ethylen/Propylen-Copolymer, Ethylen/Butylen-Copolymer und Butylen/iso-Butylen-(Co)-Polymer.

12. Durch dehnendes Verstrecken wiederablösbares Selbstklebeprodukt nach Anspruch 11,
**dadurch gekennzeichnet, dass**
der Weichmacher eine gewichtsmittlere Molmasse von mindestens 100.000 g/mol und
höchstens 1.000.000 g/mol aufweist und ein Ethylen/Propylen-Copolymer oder Ethylen/Butylen-Copolymer ist mit linearer oder radialer Struktur.

13. Durch dehnendes Verstrecken wiederablösbares Selbstklebeprodukt nach Anspruch 11,
**dadurch gekennzeichnet, dass**
der Weichmacher eine gewichtsmittlere Molmasse von mindestens 3.000 g/mol und höchstens 20.000 g/mol aufweist und ein Butylen/iso-Butylen-(Co)-Polymer ist.

14. Durch dehnendes Verstrecken wiederablösbares Selbstklebeprodukt nach zumindest einem der vorherigen Ansprüche,
**dadurch gekennzeichnet, dass**
als dehnbares Permanentträgermaterial dehnfähige Folien eingesetzt werden, bevorzugt aus Polyolefinen wie Ethylen, Propylen, Butylen und/oder Hexylen, aus Polyurethanen, aus Polyesterpolyurethanen, aus Polyetherpolyurethanen, aus Polycaprolactonpolyurethanen oder aus Kautschuk basierenden Materialien.

15. Durch dehnendes Verstrecken wiederablösbares Selbstklebeprodukt nach zumindest einem der vorherigen Ansprüche,
**dadurch gekennzeichnet, dass**
das Selbstklebeprodukt ist
- ein einschichtiges, beidseitig selbstklebendes Klebeband ist, bestehend aus einer einzigen Schicht der Haftklebemasse in Kombination mit einem temporären Trägermaterial oder
- ein mehrschichtiges, beidseitig selbstklebendes Klebeband ist, bei denen die Schichten jeweils aus der Haftklebemasse in Kombination mit einem temporären Trägermaterial bestehen oder
- ein mehrschichtiges, beidseitig selbstklebendes Klebeband mit einem Permanentträger ist, der entweder in einer Schicht aus der Haftklebemasse oder zwischen zwei Schichten aus der Haftklebemasse angeordnet ist, jeweils in Kombination mit einem temporären Trägermaterial.

16. Durch dehnendes Verstrecken wiederablösbares Selbstklebeprodukt nach Anspruch 15,
**dadurch gekennzeichnet, dass**
das Selbstklebeprodukt besteht aus
- einem einschichtigen Permanentträger (Zwischenträger), vorzugsweise enthaltend Polyolefin, wobei der Träger eine Reißdehnung von mindestens 100 %, vorzugsweise mindestens 300 %, und gegebenenfalls ein Rückstellvermögen von weniger 50 % (Test X) aufweist, wobei
- auf den Träger beidseitig jeweils eine Schicht aus der Haftklebemasse aufgebracht ist, vorzugsweise auf Basis von hydrierten Vinylaromatenblockcopolymeren und Klebharzen, wobei weiter vorzugsweise die Zusammensetzung der Klebemassen identisch ist.

17. Durch dehnendes Verstrecken wiederablösbares Selbstklebeprodukt nach zumindest einem der vorherigen Ansprüche,
**dadurch gekennzeichnet, dass**
das Selbstklebeprodukt besteht aus
- einem einschichtigen Permanentträger, vorzugsweise aus Polyurethan, wobei der Träger eine Reißdehnung von mindestens 100 %, vorzugsweise mindestens 300 %, und gegebenenfalls ein Rückstellvermögen von über 50 % (Test X) aufweist, wobei
- auf den Träger beidseitig jeweils eine Schicht aus der Haftklebemasse aufgebracht ist, wobei vorzugsweise die Zusammensetzung der Klebemassen identisch ist.

18. Substrat, insbesondere ein Bauteil, enthaltend Ethylen(Co)-Polymer, Propylen(Co)-Polymer, EPR, EPM und/oder EPDM, auf das ein Selbstklebeprodukt gemäß wenigstens einem der vorherigen Ansprüche 1 bis 17 aufgebracht ist.
